(19) Europäisches Patentamt / European Patent Office / Office européen des brevets

(11) **EP 4 358 417 A1**

(12) **EUROPEAN PATENT APPLICATION**
published in accordance with Art. 153(4) EPC

(43) Date of publication:
**24.04.2024 Bulletin 2024/17**

(21) Application number: **22831693.1**

(22) Date of filing: **15.06.2022**

(51) International Patent Classification (IPC):
*H04B 1/00* (2006.01)    *H04B 1/401* (2015.01)

(52) Cooperative Patent Classification (CPC):
**H04B 1/00; H04B 1/401**

(86) International application number:
**PCT/CN2022/098788**

(87) International publication number:
**WO 2023/273874 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2021 CN 202110731743**

(71) Applicant: **Huawei Technologies Co., Ltd.**
**Shenzhen, Guangdong 518129 (CN)**

(72) Inventors:
- **TANG, Wending**
  **Shenzhen, Guangdong 518129 (CN)**
- **ZHANG, Guanxi**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **SIGNAL TRANSMISSION APPARATUS AND METHOD THEREFOR**

(57)    This application provides a signal transmission apparatus, applied to a frequency division duplex mode, including a first switch, a first diplexer, a power amplifier, and/or an antenna. The first diplexer includes filters corresponding to m operating frequency bands, each operating frequency band includes an uplink spectrum and/or a downlink spectrum, frequencies of uplink spectrums and/or downlink spectrums included in the m operating frequency bands do not overlap with each other, a frequency of at least one of the uplink spectrums and/or the downlink spectrums included in the m operating frequency bands is less than or equal to 1 GHz, and m is an integer greater than 1; the power amplifier or the antenna or both are connected to the first switch; and the first diplexer is connected to the first switch, and a signal from the power amplifier and/or the antenna is transmitted by using the first diplexer and the first switch. Therefore, a large channel capacity can be obtained, a channel bandwidth can be increased, uplink/downlink cooperation of different spectrums can be implemented, a channel quality can be improved, and an uplink/downlink large-capacity requirement can be met.

FIG. 5

# Description

This application claims priority to Chinese Patent Application No. 202110731743.6, filed with the China National Intellectual Property Administration on June 30, 2021 and entitled "SIGNAL TRANSMISSION APPARATUS AND METHOD", which is incorporated herein by reference in its entirety.

## TECHNICAL FIELD

This application relates to the communication field, and more specifically, to a signal transmission apparatus and method in the communication field.

## BACKGROUND

Currently, due to some factors, for example, a design size of a terminal device, a same antenna is shared in a low frequency band below 1 GHz; and for a frequency band of frequency division duplex (frequency division duplex, FDD), a diplexer (Diplexer) is used to implement receiving and sending at different frequencies.

In a conventional technology, in a communication link including a frequency below 1 GHz, it is usually difficult to implement a carrier aggregation technology, a channel capacity is limited by a channel bandwidth, and it is difficult to meet an uplink/downlink large-capacity requirement. Therefore, a signal transmission apparatus and a signal transmission method are needed to resolve the foregoing problem.

## SUMMARY

This application provides a signal transmission apparatus, to obtain a large channel capacity, increase a channel bandwidth, implement uplink/downlink cooperation of different spectrums, improve a channel quality, and meet an uplink/downlink large-capacity requirement.

According to a first aspect, a signal transmission apparatus is provided, applied to a frequency division duplex FDD mode, including a first switch, a first diplexer, and a power amplifier and/or an antenna. The first diplexer includes filters corresponding to m operating frequency bands, each operating frequency band includes an uplink spectrum and/or a downlink spectrum, frequencies of uplink spectrums and/or downlink spectrums included in the m operating frequency bands do not overlap with each other, a frequency of at least one of the uplink spectrums and/or the downlink spectrums included in the m operating frequency bands is less than or equal to 1 GHz, and m is an integer greater than or equal to 2; the power amplifier or the antenna or both are connected to the first switch; and the first diplexer is connected to the first switch, and a signal from the power amplifier and/or the antenna is transmitted by using the first diplexer and the first switch.

For example, diplexers in the first diplexer share one power amplifier and one antenna, and the first diplexer includes three diplexers that are filters respectively corresponding to three different operating frequency bands (to be specific, 5th, 71st, and 74th operating frequency bands) of three uplink spectrums of an 824-849 TX spectrum, a 663-698 TX spectrum, and a 1427-1470 TX spectrum (unit: MHz). The first switch is a switch connected to the first diplexer. In an uplink transmission scenario, the shared power amplifier is in a multi-frequency transmission operating mode, and the first switch is connected to a 1st diplexer, and a signal from the shared power amplifier is transmitted to the shared antenna by using the first switch and the 1st diplexer. In a downlink transmission scenario, after a signal is received by the shared antenna, the first switch is connected to a 2nd diplexer, and then the signal is transmitted to an independent low noise amplifier (Low noise amplifier, LNA) by using the 2nd diplexer.

Based on the foregoing solution, a diplexer (the first diplexer) that is in the signal transmission apparatus and that includes the filters corresponding to the m operating frequency bands is connected to the first switch, so that the signal from the power amplifier and/or the antenna is transmitted by using the first diplexer and the first switch. The frequencies of the uplink spectrums and/or the downlink spectrums included in the m operating frequency bands do not overlap with each other, and the frequency of the at least one of the uplink spectrums and/or the downlink spectrums included in the m operating frequency bands is less than or equal to 1 GHz. Therefore, in a service requirement of uplink transmission, a large bandwidth of the uplink transmission can be obtained, and a sending capability of the uplink transmission can be improved. In a service requirement of downlink transmission, a multi-frequency signal including a low frequency can be simultaneously received, to improve a channel bandwidth and a receiving capability of the downlink transmission.

In a possible implementation, the first diplexer includes at least one of the following: a first sending diplexer, a first receiving diplexer, or a first transceiver diplexer; the first sending diplexer includes filters corresponding to m uplink spectrums, and the m operating frequency bands include the m uplink spectrums; the first receiving diplexer includes filters corresponding to m downlink spectrums, and the m operating frequency bands include the m downlink spectrums; and the first transceiver diplexer includes filters corresponding to $z_i$ uplink spectrums and $z_2$ downlink spectrums, the m operating frequency bands include the $z_i$ uplink spectrums and the $z_2$ downlink spectrums, $z_1+z_2 \in [m, 2m]$, and $z_i$ and $z_2$ are positive integers.

For example, the first sending diplexer includes filters corresponding to three different operating frequency bands (to be specific, 8th, 20th, and 71st operating frequency bands) of three uplink spectrums of an 880-915 TX spectrum, an 832-862 TX spectrum, and a 663-698 TX spectrum (unit: MHz), and the first receiving diplexer may include filters corresponding to a total of four different operating frequency bands (to be specific, 20th, 28th, 70th, and 71st operating frequency bands) of two uplink spectrums and two downlink spectrums of an 832-862 TX spectrum, a 703-748 TX spectrum, a 1995-2020 RX spectrum, and a 617-652 RX spectrum (unit: MHz).

Based on the foregoing solution, when a signal is transmitted by using the first sending diplexer, the service requirement of uplink transmission can be completed, and a multi-frequency (three different operating frequency bands) signal including a low frequency can be simultaneously sent, thereby increasing a channel bandwidth and meeting an uplink large-capacity requirement. When a signal is transmitted by using the first receiving diplexer, the service requirement of downlink transmission can be completed, and a multi-frequency (three different operating frequency bands) signal including a low frequency can be simultaneously received, thereby improving a channel quality and meeting a downlink large-capacity requirement. When the first transceiver diplexer is connected to the first sending switch and the first receiving switch, a service requirement that uplink transmission and downlink transmission are simultaneously performed can be implemented, and a multi-frequency (four different operating frequency bands) signal including a low frequency can be simultaneously received and sent, thereby improving a channel bandwidth, improving a channel quality, and meeting uplink and downlink large-capacity requirements.

In a possible implementation, the first switch includes a first sending switch and/or a first receiving switch, and the first diplexer includes the first sending diplexer, and the first sending diplexer is connected to the first sending switch; or the first diplexer includes the first receiving diplexer, and the first receiving diplexer is connected to the first receiving switch; or the first diplexer includes the first transceiver diplexer, and the first transceiver diplexer is connected to the first sending switch and the first receiving switch.

Based on the foregoing solution, the first switch may include the first sending switch and/or the first receiving switch. In the foregoing three manners in which the first diplexer is connected to the first switch, the first sending diplexer is connected to the first sending switch, so that the service requirement of uplink transmission can be completed, and a multi-frequency signal including a low frequency is simultaneously sent, thereby improving a channel bandwidth, improving a channel quality, and meeting an uplink large-capacity requirement. Alternatively, the first receiving diplexer is connected to the first receiving switch, so that the service requirement of downlink transmission can be completed, so that a multi-frequency signal including a low frequency can be simultaneously received, thereby improving a channel bandwidth, improving a channel quality, and meeting a downlink large-capacity requirement. Alternatively, the first transceiver diplexer is connected to the first sending switch and the first receiving switch, so that a service requirement of uplink/downlink transmission can be completed, and a multi-frequency signal including a low frequency is simultaneously received and sent, thereby improving a channel bandwidth, improving a channel quality, and meeting uplink and downlink large-capacity requirements.

In a possible implementation, the apparatus further includes a first control module, configured to: based on a service requirement, control the first sending switch to be connected to the first sending diplexer, or control the first receiving switch to be connected to the first receiving diplexer, or control both the first sending switch and the first receiving switch to be connected to the first transceiver diplexer.

Based on the foregoing solution, a connection between the first switch and the first diplexer may be controlled based on the service requirement. For example, in the service requirement of uplink transmission, the first sending diplexer is controlled to be connected to the first sending switch, so that a large channel capacity can be obtained, and a multi-frequency signal including a low frequency can be simultaneously sent. Alternatively, in the service requirement of downlink transmission, the first receiving diplexer is controlled to be connected to the first receiving switch, so that a large channel capacity can be obtained, and a multi-frequency signal including a low frequency can be simultaneously received. Alternatively, in the service requirement in which uplink transmission and downlink transmission are simultaneously performed, the first transceiver diplexer is controlled to be connected to the first sending switch and the first receiving switch, thereby increasing an instantaneous capacity bandwidth and meeting uplink and downlink large-capacity requirements, so that a multi-frequency signal including a low frequency is simultaneously received and sent.

In a possible implementation, the apparatus further includes a second switch and a second diplexer, the second diplexer includes a filter corresponding to one operating frequency band, and the operating frequency band includes an uplink spectrum and a downlink spectrum; and the second diplexer is connected to the second switch, and the signal from the power amplifier and/or the antenna is transmitted by using the second diplexer and the second switch.

In a possible implementation, the apparatus further includes a second control module, and the second control module is configured to: based on a channel capacity requirement, control the first switch to be connected to the first diplexer, or control the second switch to be connected to the second diplexer.

Based on the foregoing solution, based on the channel capacity requirement, the first diplexer is controlled to be connected to the first switch, or the second diplexer is controlled to be connected to the second switch. Therefore, in a communication scenario in which a large capacity of a channel is required, the first diplexer may be connected to the first switch, so that uplink or downlink cooperation of different spectrums can be implemented at a same moment, thereby improving an instantaneous capacity bandwidth, improving a channel quality, and meeting an uplink and/or downlink large-capacity requirement. In a small-capacity communication scenario or a communication scenario in which heavy traffic is not required, the second diplexer may be controlled to be connected to the second switch, so that a terminal device operates in only one operating frequency band at a same moment, thereby achieving effect of low energy consumption and a low loss, and achieving a balance between communication and power consumption.

According to a second aspect, a signal transmission method is provided, applied to a signal transmission apparatus in a frequency division duplex FDD mode. The signal transmission apparatus includes a first switch, a first diplexer, and a power amplifier and/or an antenna; the first diplexer includes filters corresponding to m operating frequency bands; each operating frequency band includes an uplink spectrum and/or a downlink spectrum; frequencies of uplink spectrums and/or downlink spectrums included in the m operating frequency bands do not overlap with each other; a frequency of at least one spectrum included in the uplink spectrums and/or the downlink spectrums in the m operating frequency bands is less than or equal to 1 GHz; m is an integer greater than or equal to 2; and the method includes: The first diplexer is connected to the first switch, and a signal from the power amplifier and/or the antenna is transmitted by using the first diplexer and the first switch.

For beneficial effect brought by the foregoing signal transmission method, refer to the specific descriptions of the first aspect. For brevity, details are not described herein again.

In a possible implementation, the first diplexer includes at least one of the following: a first sending diplexer, a first receiving diplexer, or a first transceiver diplexer.

The first sending diplexer includes filters corresponding to m uplink spectrums, and the m operating frequency bands include the m uplink spectrums; the first receiving diplexer includes filters corresponding to m downlink spectrums, and the m operating frequency bands include the m downlink spectrums; and the first transceiver diplexer includes filters corresponding to $z_i$ uplink spectrums and $z_2$ downlink spectrums, the m operating frequency bands include the $z_i$ uplink spectrums and the $z_2$ downlink spectrums, $z_1+z_2 \in [m, 2m]$, and $z_i$ and $z_2$ are positive integers.

For beneficial effect brought by the foregoing signal transmission method, refer to the specific descriptions of the first aspect. For brevity, details are not described herein again.

In a possible implementation, the first switch includes a first sending switch and/or a first receiving switch, and the first diplexer includes the first sending diplexer, and the first sending diplexer is connected to the first sending switch; or the first diplexer includes the first receiving diplexer, and the first receiving diplexer is connected to the first receiving switch; or the first diplexer includes the first transceiver diplexer, and the first transceiver diplexer is connected to the first sending switch and the first receiving switch.

In a possible implementation, the method further includes: based on a service requirement, controlling the first sending switch to be connected to the first sending diplexer, or controlling the first receiving switch to be connected to the first receiving diplexer, or controlling both the first sending switch and the first receiving switch to be connected to the first transceiver diplexer.

In a possible implementation, the apparatus further includes a second switch and a second diplexer, the second diplexer includes a filter corresponding to one operating frequency band, and the operating frequency band includes an uplink spectrum and a downlink spectrum, and the method further includes: The second diplexer is connected to the second switch, and the signal from the power amplifier and/or the antenna is transmitted by using the second diplexer and the second switch.

In a possible implementation, the method further includes: based on a channel capacity requirement, controlling the first switch to be connected to the first diplexer, or controlling the second switch to be connected to the second diplexer.

For beneficial effect brought by the foregoing signal transmission method, refer to the specific descriptions of the first aspect. For brevity, details are not described herein again.

According to a third aspect, a terminal device is provided, including the signal transmission apparatus according to any one of the first aspect or the implementations of the first aspect.

**BRIEF** DESCRIPTION OF DRAWINGS

FIG. 1 is a schematic diagram of an FDD standard applicable to an embodiment of this application;
FIG. 2 is a schematic diagram of spectrum distribution of an operating frequency band below 1 GHz applicable to an embodiment of this application;
FIG. 3 is a schematic diagram of an FDD low-frequency communication architecture;
FIG. 4 is a schematic diagram of an FDD medium-high frequency communication architecture;
FIG. 5 is a schematic block diagram of a signal transmission apparatus 500 according to an embodiment of this application;
FIG. 6 is a schematic block diagram of a signal transmission apparatus 600 according to an embodiment of this application;
FIG. 7 is a schematic block diagram of a signal transmission apparatus 700 according to an embodiment of this application;

FIG. 8 is a schematic block diagram of a signal transmission apparatus 800 according to an embodiment of this application;

FIG. 9 is a schematic block diagram of a signal transmission apparatus 900 according to an embodiment of this application;

FIG. 10 is a schematic block diagram of a signal transmission apparatus 1000 according to an embodiment of this application;

FIG. 11 is a schematic block diagram of a signal transmission apparatus 1100 according to an embodiment of this application;

FIG. 12 is a schematic block diagram of a signal transmission apparatus 1200 according to an embodiment of this application;

FIG. 13 is a schematic block diagram of a signal transmission apparatus 1300 according to an embodiment of this application;

FIG. 14 is a schematic block diagram of a signal transmission apparatus 1400 according to an embodiment of this application;

FIG. 15 is a schematic block diagram of a signal transmission apparatus 1500 according to an embodiment of this application;

FIG. 16 is a schematic flowchart of a signal transmission method 1600 according to an embodiment of this application; and

FIG. 17 is a schematic block diagram of a signal transmission apparatus 1700 according to an embodiment of this application.

## DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system, a new radio (new radio, NR) system, or another evolved communication system.

A terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device that has a wireless communication function or another processing device connected to a wireless modem, a vehicle-mounted device, a wearable device, a terminal device in a 5G network, or a terminal device in a future evolved public land mobile network (public land mobile network, PLMN). This is not limited in embodiments of this application.

As an example instead of a limitation, in embodiments of this application, the terminal device may alternatively be a wearable device. The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of a user. The wearable device is a hardware device, and also implements a powerful function through software support, data exchange, and cloud interaction. Generalized wearable smart devices include full-featured and large-size devices that can implement complete or partial functions without depending on smartphones, such as smart watches or smart glasses, and include devices that focus only on a type of application function and need to operate with other devices such as smartphones, for example, various smart bands or smart jewelry for monitoring physical signs.

In addition, in embodiments of this application, the terminal device may alternatively be a terminal device in an internet of things (internet of things, IoT) system. IoT is an important part of future development of information technologies. A main technical feature of the IoT is connecting things to a network by using a communication technology, to implement an intelligent network for interconnection between a person and a machine or between things.

With development of mobile communication, a large quantity of scenarios have increasingly high requirements on a transmission rate of uplink data, a transmission delay of uplink data, and the like. For example, applications such as mobile phone live broadcast, television station high-definition video live broadcast, new media live broadcast, camera surveillance video, and real-time upload of factory production line data are all used to upload data in real time through mobile communication.

Currently, there are two standards: frequency division duplex (frequency division duplex, FDD) and time division duplex (time division duplex, TDD) in the long term evolution (long term evolution, LTE) system, the 5th generation (5th generation, 5G) system, the new radio (New radio, NR) system, or another evolved communication system.

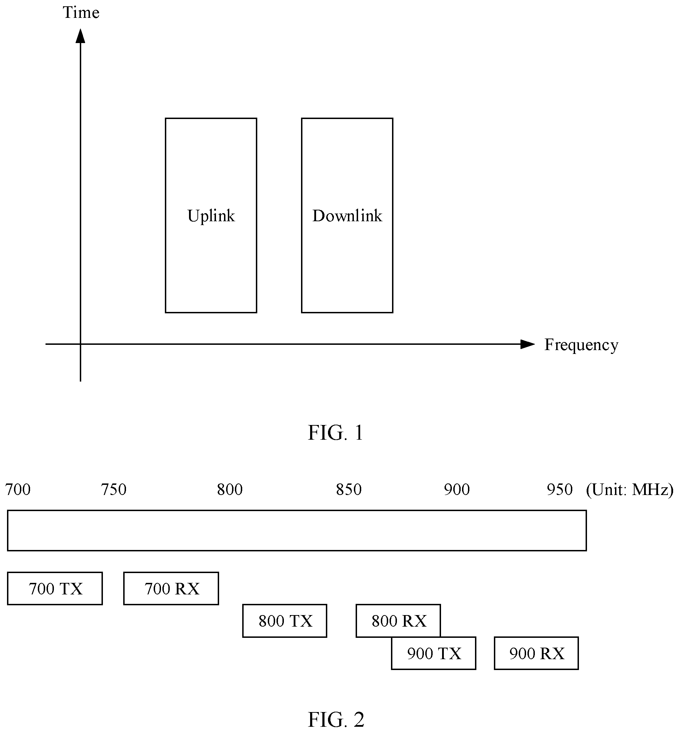

FIG. 1 is a schematic diagram of an FDD standard applicable to an embodiment of this application. As shown in FIG. 1, in a scenario of the FDD standard, uplink transmission and downlink transmission are performed on two independent channels with symmetric frequencies, a receiving channel and a sending channel are distinguished by using a frequency band, and the uplink transmission and the downlink transmission can be simultaneously performed.

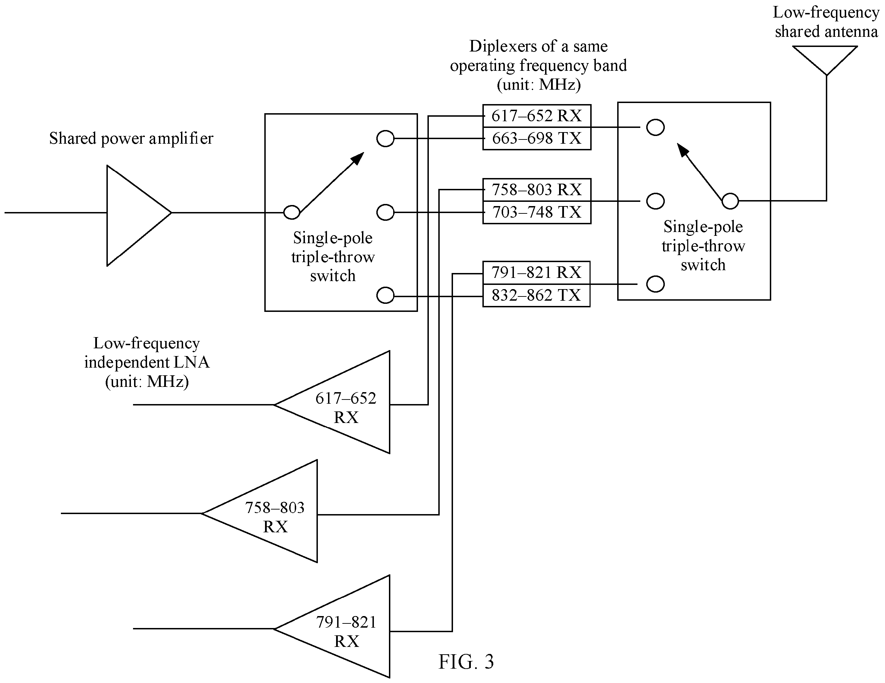

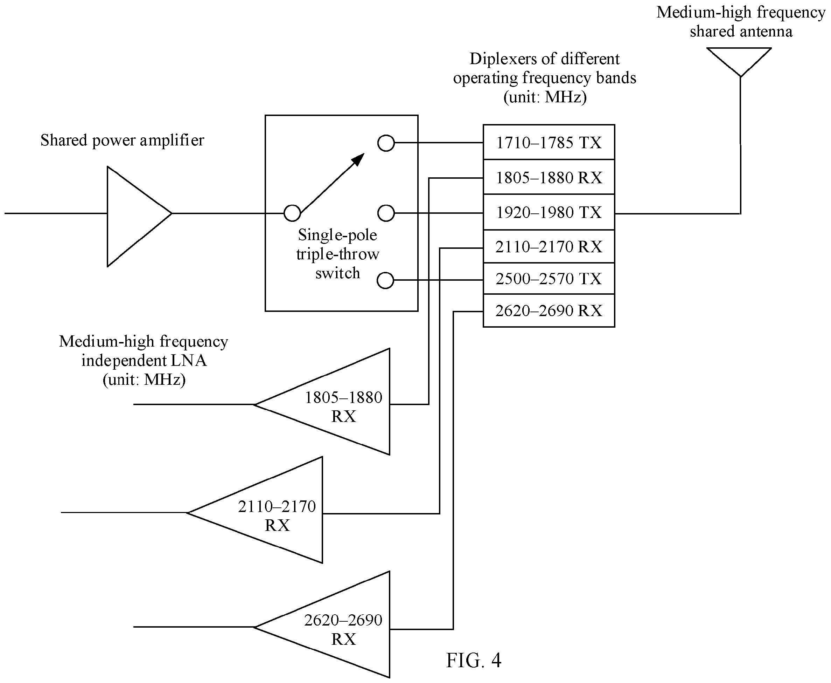

Due to impact of some factors, for example, limited by a design size of the terminal device, a same antenna needs to be shared in a low frequency band below 1 GHz. For an FDD frequency band, a diplexer is configured to implement receiving and sending at different frequencies. FIG. 2 is a schematic diagram of spectrum distribution of an operating frequency band below 1 GHz applicable to an embodiment of this application. As shown in FIG. 2, each operating frequency band includes an uplink (transmitter, TX) spectrum and a downlink (receiver, RX) spectrum, and frequency ranges of uplink spectrums and downlink spectrums included in different operating frequency bands may overlap. For example, frequency ranges of 800 RX in an 800 operating frequency band and 900 TX (unit: MHz) in a 900 operating frequency band overlap. Therefore, a switch is usually required to implement switching between different spectrums. FIG. 3 is a schematic diagram of an FDD low-frequency communication architecture. As shown in FIG. 3, the communication framework includes a shared power amplifier (power amplifier, PA), a single-pole triple-throw switch, three diplexers corresponding to different operating frequency bands, a shared antenna, and a shared low noise amplifier (low noise amplifier, LNA), where each diplexer includes a filter corresponding to an operating frequency band including an uplink spectrum and a downlink spectrum. In a communication process, switching between different operating frequency bands may be implemented by using the single-pole three-throw switch. FIG. 4 is a schematic diagram of an FDD medium-high frequency communication architecture. As shown in FIG. 4, in a communication architecture of a medium and high frequency band, because a frequency spacing between frequency bands is large, filters corresponding to different operating frequency bands may form a diplexer.

However, in a Shannon formula, that is,

$$C = B \cdot \log_2(1 + \frac{S}{N})$$

, C indicates a channel capacity of a channel, B indicates a channel bandwidth, S indicates a signal power, and N indicates a noise power. It can be learned that, in a communication system, a wider bandwidth can bring a larger channel capacity, thereby improving uplink/downlink communication experience.

In a medium-high frequency communication system, a carrier aggregation (carrier aggregation, CA) technology may be used, as shown in FIG. 4, to implement a large bandwidth of 1800 RX+2100 RX+2600 RX, thereby improving a channel capacity.

However, in a low-frequency communication link below 1 GHz, generally, links between three operating frequency bands can only operate independently. Consequently, it is difficult to implement the carrier aggregation technology, and a channel capacity is limited by a channel bandwidth.

In view of this, this application provides a signal transmission apparatus and method, to simultaneously receive and/or send a multi-frequency signal including a frequency band of 1 GHz and lower, and improve a channel bandwidth including the frequency band of 1 GHz and lower, thereby improving an uplink and/or downlink broadband capacity and improving communication performance. Further, an original low-frequency communication architecture may be retained. In some operating scenarios, a terminal device operates in only one operating frequency band at a same moment, to achieve effect of low energy consumption and a low loss.

It should be understood that the signal transmission apparatus provided in embodiments of this application may be applied to an operating frequency band including a frequency below 1 GHz, for example, a 28th operating frequency band including a 703 MHz-748 MHz uplink spectrum and a 758 MHz-803 MHz downlink spectrum, a 5th operating frequency band including an 824 MHz-849 MHz uplink spectrum and an 869 MHz-894 MHz downlink spectrum, an 8th operating frequency band including an 880 MHz-915 MHz uplink spectrum and a 925 MHz-960 MHz downlink spectrum, a 74th operating frequency band including a 1427 MHz-1470 MHz uplink spectrum and a 1475 MHz-1518 MHz downlink spectrum, and other specified operating frequency bands in an NR frequency band specified by the 3rd generation partnership project (3rd generation partnership project, 3GPP).

A signal transmission apparatus 500 is applied to a frequency division duplex FDD mode, and may include a first switch, a first diplexer, and a communication module. The first diplexer includes filters corresponding to m operating frequency bands, each operating frequency band includes an uplink spectrum and/or a downlink spectrum, frequencies of uplink spectrums and/or downlink spectrums included in the m operating frequency bands do not overlap with each other, a frequency of at least one of the uplink spectrums and/or the downlink spectrums included in the m operating frequency bands is less than or equal to 1 GHz, and m is an integer greater than or equal to 2. A power amplifier or an antenna or both are connected to the first switch, the first diplexer is connected to the first switch, and a signal from the power amplifier and/or the antenna is transmitted by using the first diplexer and the first switch. Further, the communication module may include the power amplifier and/or the antenna, and there may be one or more first diplexers. This is not limited in this application.

The first diplexer includes the filters corresponding to the m operating frequency bands. In a design, the m operating frequency bands include m uplink spectrums. For example, the first diplexer may include a first sending diplexer, and the first sending diplexer includes filters corresponding to three operating frequency bands (to be specific, 3rd, 5th, and 28th operating frequency bands) of three uplink spectrums of a 1710-1785 TX spectrum, an 824-849 TX spectrum, and a 703-748 TX spectrum (unit: MHz).

In another design, the m operating frequency bands include m downlink spectrums. For example, the first diplexer may include a first receiving diplexer, and the first receiving diplexer includes filters corresponding to three operating frequency bands (to be specific, 3rd, 5th, and 8th operating frequency bands) of three downlink spectrums of a 1805-1880 RX spectrum, an 869-894 RX spectrum, and a 925-960 RX spectrum (unit: MHz).

In another design, the m operating frequency bands include $z_i$ uplink spectrums and $z_2$ downlink spectrums, $z_1+z_2 \in [m, 2m]$, and $z_i$ and $z_2$ are positive integers. For example, the first diplexer may include a first transceiver diplexer, and the first transceiver diplexer includes filters corresponding to a total of two operating frequency bands (to be specific, 8th and 28th operating frequency bands) of two uplink spectrums and two downlink spectrums of an 880-915 TX spectrum, a 925-960 RX spectrum, a 703-748 TX spectrum, and a 758-803 RX spectrum (unit: MHz).

In addition, the first diplexer is connected to the first switch. In a design, the first switch includes a first sending switch, and the first sending switch is connected to the first sending diplexer, and a signal from the communication module is sent by using the first sending diplexer and the first sending switch. Therefore, the first sending diplexer is connected to the first sending switch, so that a service requirement of uplink transmission can be completed, and a multi-frequency signal including a low frequency is simultaneously sent, thereby improving a channel bandwidth, improving a channel quality, and meeting an uplink large-capacity requirement. The communication module may include a shared power amplifier.

In another design, the first switch includes a first receiving switch, and the first receiving switch is connected to the first receiving diplexer, and a signal from the communication module is received by using the first receiving diplexer and the first receiving switch. Therefore, a multi-frequency signal including a low frequency can be simultaneously received, thereby improving a channel bandwidth, improving a channel quality, and meeting a downlink large-capacity requirement. The communication module may include a shared antenna.

In another design, the first switch includes a first sending switch and a first receiving switch, and both the first sending switch and the first receiving switch are connected to the first transceiver diplexer, and a signal from the communication module is received and sent by using the first sending switch, the first transceiver diplexer, and the first receiving switch. Therefore, a service requirement of uplink/downlink transmission can be completed, and a multi-frequency signal including a low frequency is simultaneously received and sent, thereby improving a channel bandwidth, improving a channel quality, and meeting uplink and downlink large-capacity requirements. The communication module may include a shared power amplifier and a shared antenna.

Further, the signal transmission apparatus 500 further includes a first control module, configured to control, based on a service requirement, the first switch to be connected to the first diplexer. The service requirement includes an uplink transmission (signal sending) requirement, a downlink transmission (signal receiving) requirement, and a requirement for simultaneous uplink and downlink transmission (signal receiving and sending).

In a design, if the signal from the communication module is sent, the first sending switch is controlled to be connected to the first sending diplexer. The communication module may include the shared power amplifier.

In another design, if the signal from the communication module is received, the first receiving switch is controlled to be connected to the first receiving diplexer. The communication module may include the shared antenna.

In another design, if signals from the antenna and the power amplifier of the communication module are received and sent, both the first sending switch and the first receiving switch are controlled to be connected to the first transceiver diplexer. The communication module may include the shared power amplifier and the shared antenna.

Therefore, the foregoing connection between the first switch and the first diplexer may be controlled based on the service requirement. For example, in the service requirement of uplink transmission, the first sending diplexer is controlled to be connected to the first sending switch, so that a large channel capacity can be obtained, and a multi-frequency signal including a low frequency can be simultaneously sent. Alternatively, in the service requirement of downlink transmission, the first receiving diplexer is controlled to be connected to the first receiving switch, so that a large channel capacity can be obtained, and a multi-frequency signal including a low frequency can be simultaneously received. Alternatively, in the service requirement in which uplink transmission and downlink transmission are simultaneously performed, the first transceiver diplexer is controlled to be connected to the first sending switch and the first receiving switch, thereby increasing an instantaneous capacity bandwidth and meeting uplink and downlink large-capacity requirements, so that a multi-frequency signal including a low frequency is simultaneously received and sent.

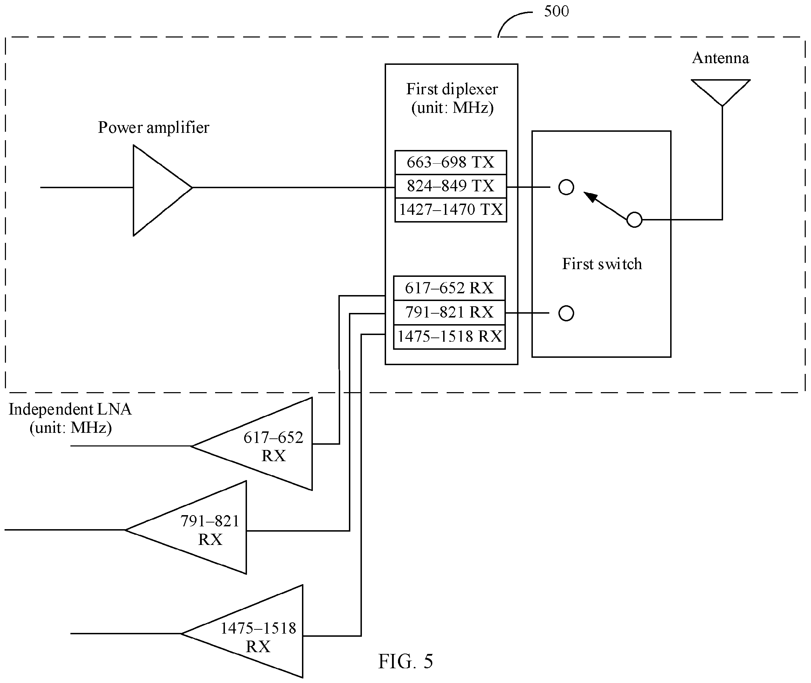

FIG. 5 is a schematic block diagram of a signal transmission apparatus 500 according to an embodiment of this application. For example, as shown in FIG. 5, diplexers in the first diplexer share one power amplifier and one antenna, and the first diplexer includes two diplexers. A 1st diplexer, that is, the first sending diplexer, includes filters corresponding to three different operating frequency bands (to be specific, 5th, 71st, and 74th operating frequency bands) of three uplink spectrums of an 824-849 TX spectrum, a 663-698 TX spectrum, and a 1427-1470 TX spectrum (unit: MHz). A 2nd diplexer, that is, the first receiving diplexer, includes filters corresponding to three different operating frequency bands (to be specific, 20th, 71st, and 74th operating frequency bands) of three downlink spectrums of a 791-821 RX spectrum, a 617-652 RX spectrum, and a 1475-1518 RX spectrum (unit: MHz). The first switch is a switch connected to the first diplexer. In FIG. 5, the switch is a single-pole double-throw switch.

In an uplink transmission scenario, the shared power amplifier is in a multi-frequency transmission operating mode, and the first switch is connected to the first sending diplexer, so that a large bandwidth of uplink transmission can be obtained, and a sending capability of the uplink transmission can be improved.

In a downlink transmission scenario, after a signal is received by the shared antenna, the first switch is connected to the first receiving diplexer, and the signal is transmitted to an independent LNA by using the first diplexer. Therefore, a multi-frequency signal including a low frequency can be simultaneously received, to improve a channel bandwidth and a receiving capability of downlink transmission.

Further, the signal transmission apparatus 500 further includes the first control module. The first control module is configured to: based on a service requirement, control the first switch to be connected to the first sending diplexer, or control the first switch to be connected to the first receiving diplexer.

For example, if a signal transmitted by using the signal transmission apparatus 500 is the service requirement of the uplink transmission, the first control module controls the first switch to be connected to the first sending diplexer. If a signal transmitted by using the signal transmission apparatus 500 is the service requirement of the downlink transmission, the first control module controls the first switch to be connected to the first receiving diplexer.

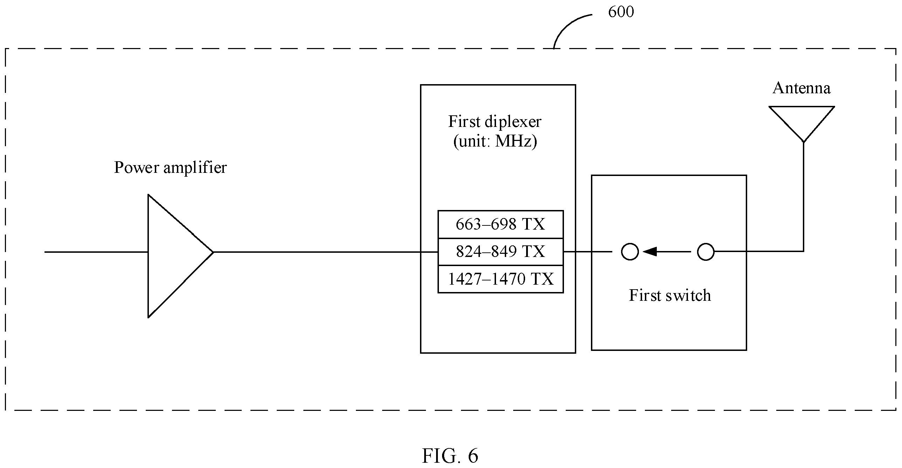

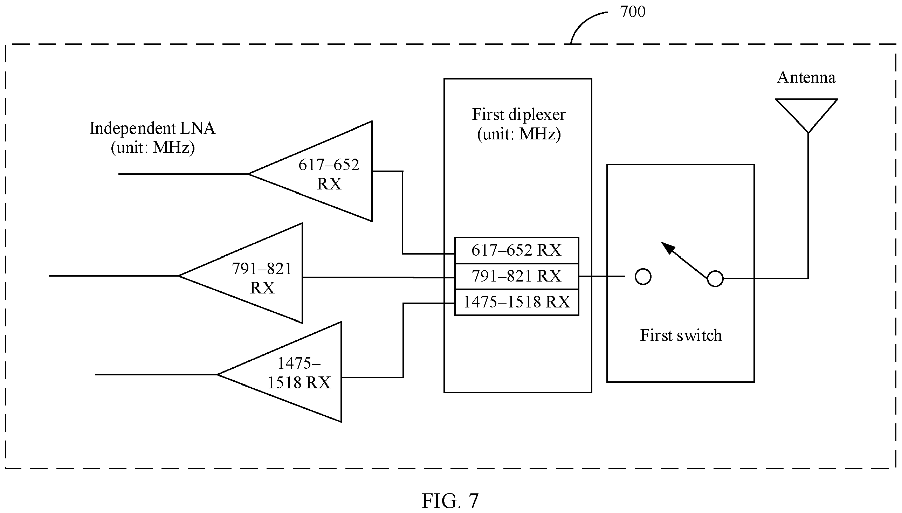

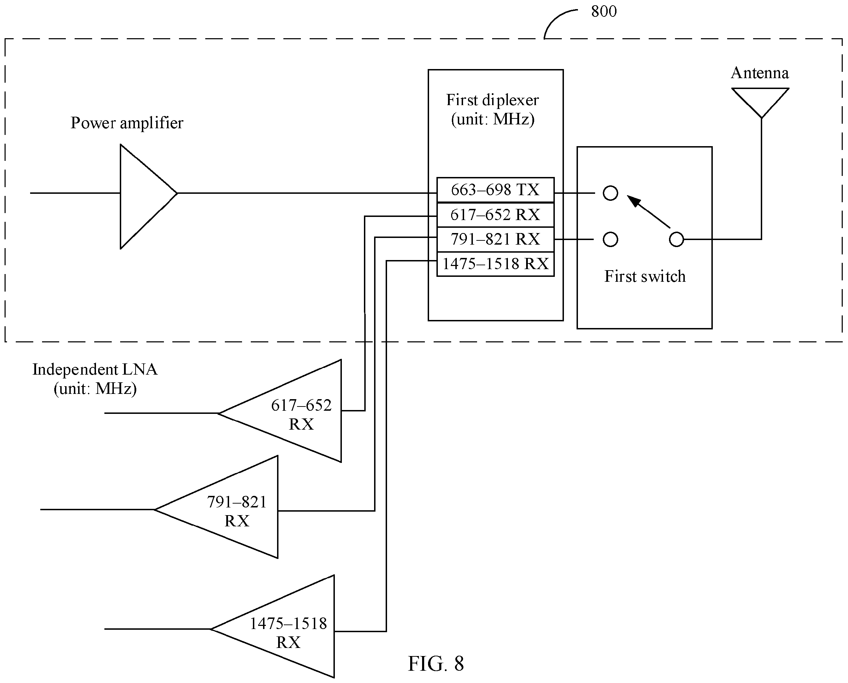

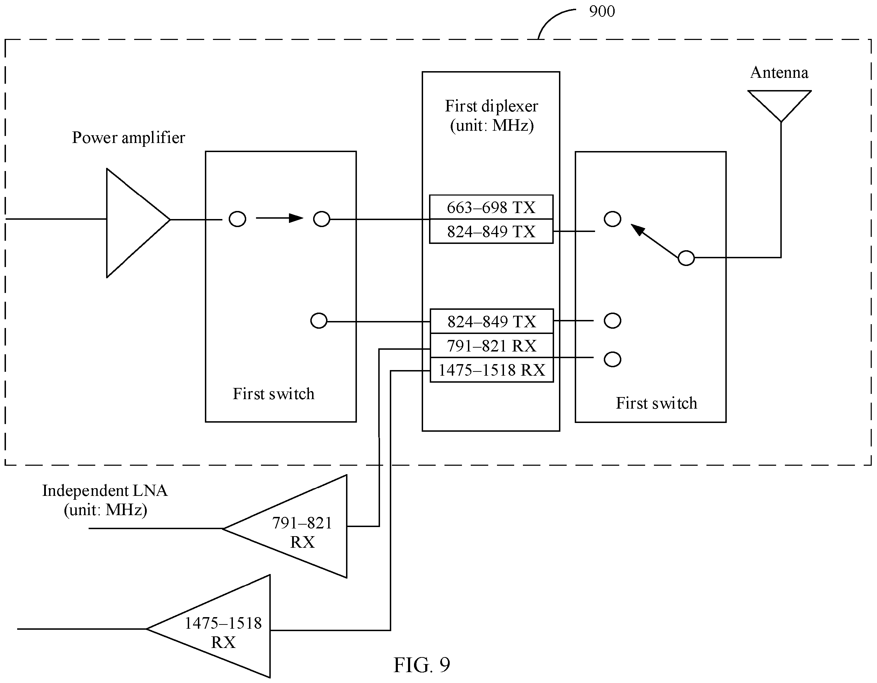

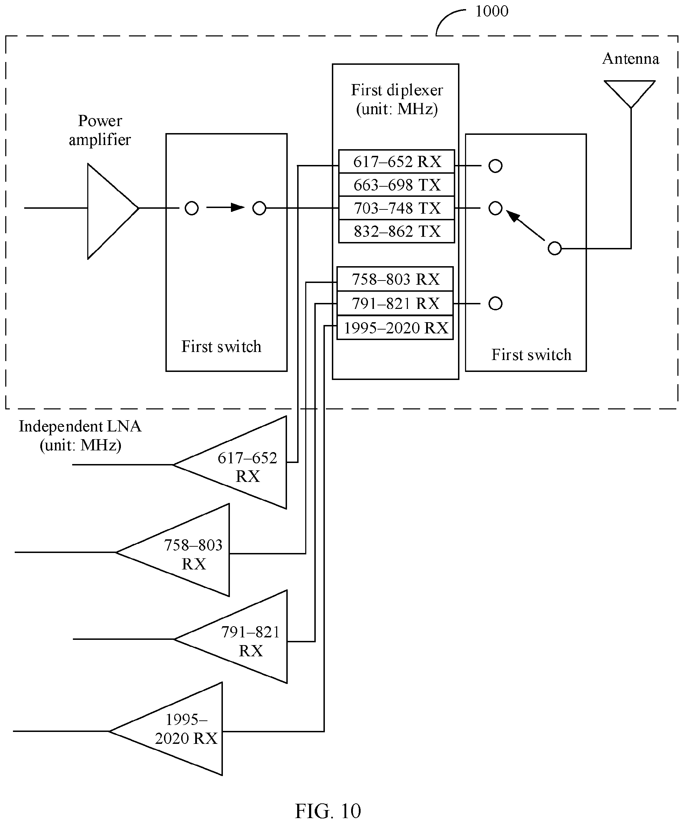

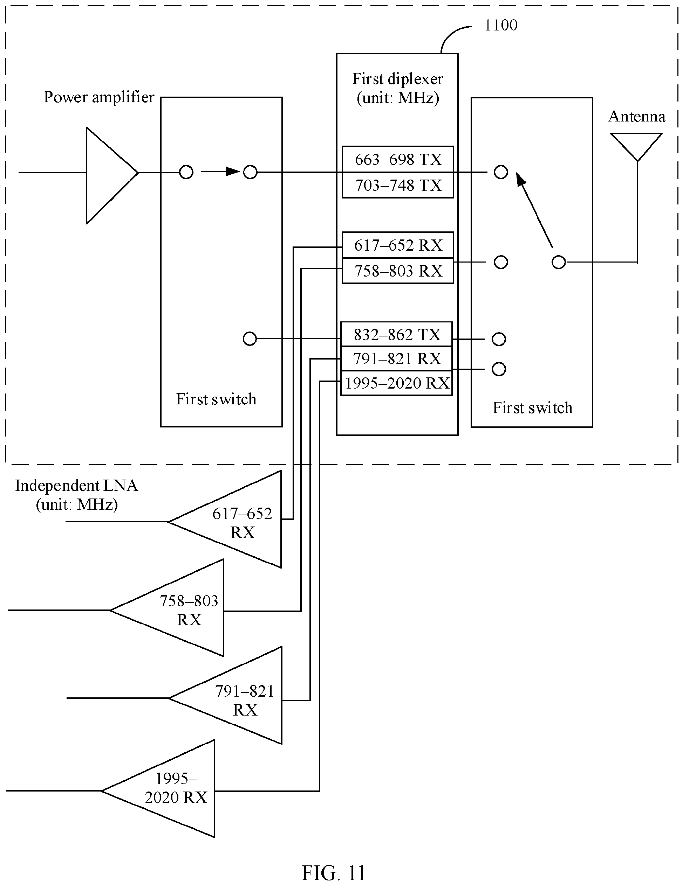

It should be understood that, in the signal transmission apparatus 500, the first diplexer may include the first sending diplexer and the first receiving diplexer; or include only the first sending diplexer, as shown in FIG. 6; or include only the first receiving diplexer, as shown in FIG. 7; or include only the first transceiver diplexer, as shown in FIG. 8; or may include both the first sending diplexer and the first transceiver diplexer, as shown in FIG. 9; or include both the first receiving diplexer and the first transceiver diplexer, as shown in FIG. 10; or include the first sending diplexer, the first receiving diplexer, and the first transceiver diplexer, as shown in FIG. 11. This is not limited in this application. Frequencies of spectrums corresponding to filters included in any two diplexers may partially overlap.

The signal transmission apparatus may include the power amplifier, the antenna, the first switch, the first diplexer, a second switch, and a second diplexer. The first diplexer includes the filters corresponding to the m operating frequency bands, each operating frequency band includes an uplink spectrum and/or a downlink spectrum, the frequencies of the uplink spectrums and/or the downlink spectrums included in the m operating frequency bands do not overlap with each other, a frequency of at least one of the uplink spectrums and/or the downlink spectrums included in the m operating frequency bands is less than or equal to 1 GHz, and m is an integer greater than or equal to 2. The second diplexer includes a filter corresponding to one operating frequency band, and the operating frequency band includes an uplink spectrum and a downlink spectrum. The first diplexer is connected to the first switch, and the signal from the power amplifier and/or the antenna is transmitted by using the first diplexer and the first switch. Further, the first switch includes the first sending switch and/or the first receiving switch. The second diplexer is connected to the second switch, and the signal from the power amplifier and/or the antenna is transmitted by using the second diplexer and the second switch. The second switch includes a second sending switch and a second receiving switch. Further, the first diplexer may include one or more diplexers. This is not limited in this application.

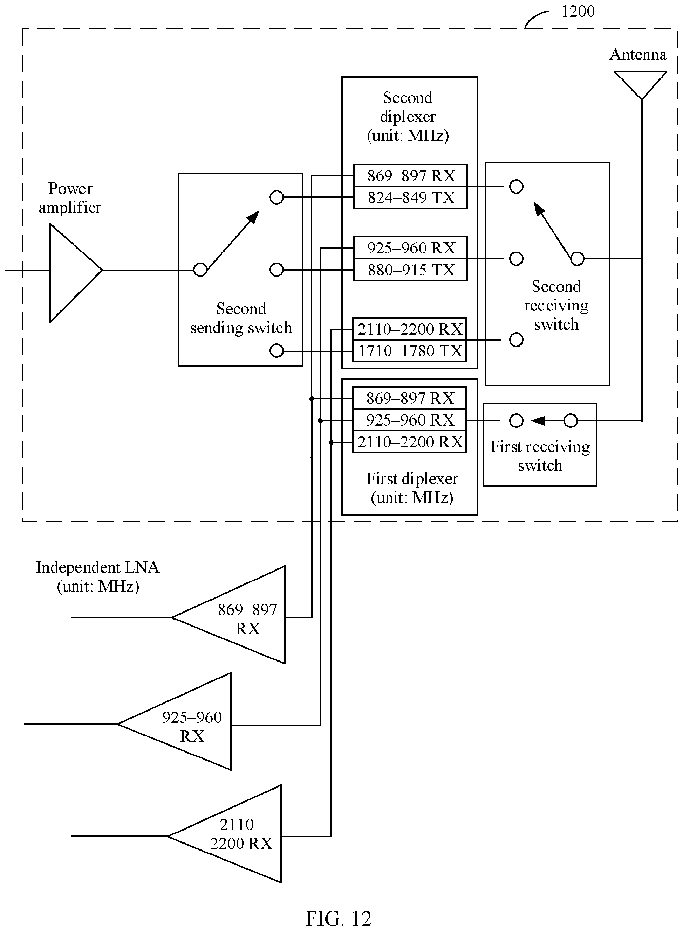

FIG. 12 is a schematic block diagram of a signal transmission apparatus 1200 according to an embodiment of this application. Specifically, as shown in FIG. 12, a first diplexer may include filters corresponding to three different operating frequency bands (to be specific, 5th, 8th, and 66th operating frequency bands) of three downlink spectrums of an 869-897 RX spectrum, a 925-960 RX spectrum, and a 2110-2200 RX spectrum (unit: MHz). A first switch is a first receiving switch, and is a switch connected to the first diplexer, and the switch is a single-pole single-throw switch. A second diplexer includes three diplexers, including filters respectively corresponding to three operating frequency bands (to be specific, 5th, 8th, and 66th operating frequency bands) of an 824-849 TX spectrum and an 869-897 RX spectrum, an 880-915 TX spectrum and a 925-960 RX spectrum, and a 1710-1780 TX spectrum and a 2110-2200 RX spectrum (unit: MHz). A second switch is a switch connected to the second diplexer. The second switch includes a second sending switch configured to send a signal and a second receiving switch configured to receive a signal, and both of which are single-pole triple-throw switches.

In an uplink transmission scenario, a shared power amplifier is in a multi-frequency transmission operating mode, and the second sending switch and the second receiving switch may be connected to a second diplexer of a corresponding frequency based on a signal frequency, to complete uplink transmission.

In a downlink transmission scenario, after a signal is received by a shared antenna, based on a channel capacity requirement, the first diplexer is connected to the first switch, or the second diplexer is connected to the second switch. For example, in a small-traffic communication scenario, the second switch may be connected, based on a signal frequency, to a diplexer that is in the second diplexer and that is corresponding to the signal frequency, so that the signal from the antenna is received by using the second diplexer and the second switch, and is transmitted to an independent LNA of a corresponding spectrum. In this way, effect of low energy consumption and a low loss of a terminal device can be achieved, and a balance between communication and power consumption can be obtained. In a downlink large-capacity communication scenario, the first switch may be connected to the first diplexer, so that the signal from the antenna is received by using the first diplexer and the first switch, and the signal is transmitted to an independent LNA of a corresponding spectrum. Therefore, a multi-frequency signal including a low frequency can be simultaneously received, thereby improving a channel bandwidth, improving a channel quality, and meeting a downlink large-capacity requirement.

Further, the signal transmission apparatus 1200 further includes a second control module. The second control module is configured to: based on a channel capacity requirement, control the first switch to be connected to the first diplexer, or control the second switch to be connected to the second diplexer. In addition, the signal transmission apparatus 1200 may further include a third control module. If the second diplexer is connected to the second switch, the third control module is further configured to control, based on a signal frequency, the second switch to be connected to a diplexer that is in the second diplexer and that is corresponding to the signal frequency.

For example, a frequency of a signal received by the signal transmission apparatus 1200 is 950 MHz. Based on the channel capacity requirement, if a large capacity needs to be met, the second control module controls the first receiving switch (the first switch) to be connected to the first diplexer; or if a large capacity does not need to be met, the second control module controls the second switch to be connected to the second diplexer.

Further, based on the frequency (that is, 950 MHz) of the signal, the third control module controls the second switch to be connected to a second diplexer of the corresponding signal frequency.

It should be understood that, in the signal transmission apparatus 1200, the second receiving switch and the first receiving switch may be a same switch. In FIG. 12, for example, the switch may be a single-pole four-throw switch. The second control module may select, based on the channel capacity requirement, the switch to be connected to the first diplexer or the second diplexer, and if the switch is connected to the second diplexer, select, based on a frequency of a transmitted signal, the switch to be connected to a diplexer that is in the second diplexer and that is corresponding to the signal frequency.

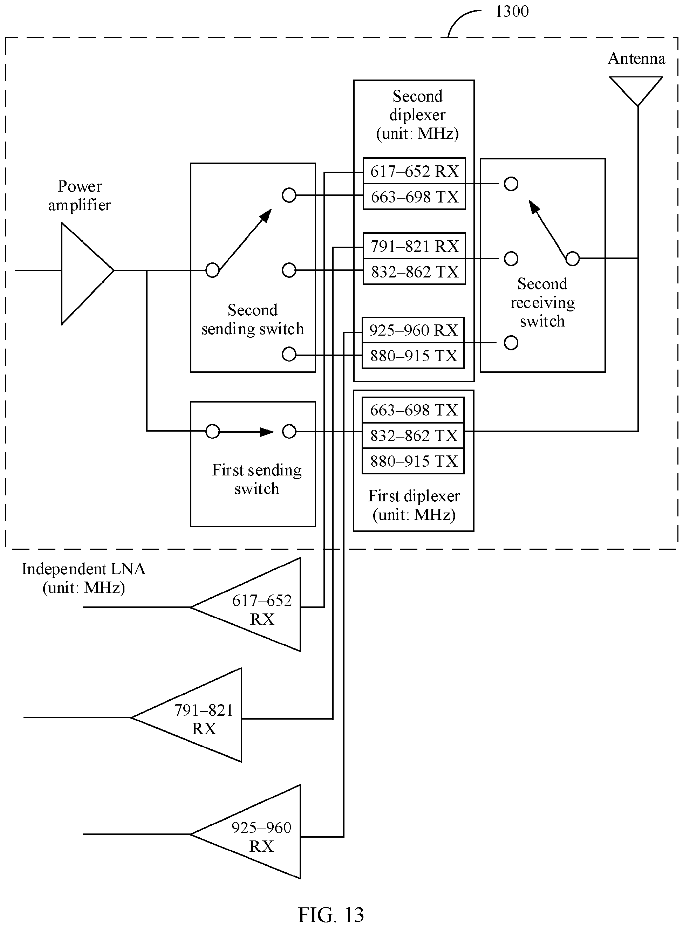

FIG. 13 is a schematic block diagram of a signal transmission apparatus 1300 according to an embodiment of this application. Specifically, as shown in FIG. 7, the signal transmission apparatus 1300 may include a power amplifier, an antenna, a first switch, a first diplexer, a second switch, and a second diplexer. The first diplexer includes filters corresponding to three different operating frequency bands (to be specific, 8th, 20th, and 71st operating frequency bands) of three uplink spectrums of an 880-915 TX spectrum, an 832-862 TX spectrum, and a 663-698 TX spectrum (unit: MHz). The first switch is a first sending switch, and is a switch connected to the first diplexer, and the switch is a single-pole single-throw switch. The second diplexer includes three diplexers, including filters respectively corresponding to three operating frequency bands (to be specific, 8th, 20th, and 71st operating frequency bands) of an 880-915 TX spectrum and a 925-960 RX spectrum, an 832-862 TX spectrum and a 791-821 RX spectrum, and a 663-698 TX spectrum and a 617-652 RX spectrum (unit: MHz). The second switch is a switch connected to the second diplexer. The second switch includes a second sending switch configured to send a signal and a second receiving switch configured to receive a signal, and both of which are single-pole triple-throw switches.

In an uplink transmission scenario, the shared power amplifier is in a multi-frequency transmission operating mode, and based on a channel capacity requirement, the first diplexer may be connected to the first sending switch (the first switch) or the second diplexer may be connected to the second switch. For example, in a small-traffic communication scenario, the second switch may be connected, based on a signal frequency, to a diplexer that is in the second diplexer and that is corresponding to the signal frequency, so that a signal from the shared power amplifier is received by using the second diplexer and the second sending switch, and the signal is transmitted to the shared antenna by using the second receiving switch, thereby completing uplink transmission. In this way, effect of low energy consumption and a low loss of a terminal device can be achieved, and a balance between communication and power consumption can be obtained. In a heavy-traffic communication scenario, the first sending switch (the first switch) may be connected to the first diplexer, so that the first diplexer and the first sending switch (the first switch) receive a signal from the shared power amplifier, and then the signal is transmitted to the shared antenna. Therefore, a multi-frequency signal including a low frequency can be simultaneously sent, thereby improving a channel bandwidth, improving a channel quality, and meeting an uplink large-capacity requirement.

In a downlink transmission scenario, after a signal is received by the shared antenna, the second receiving switch may be connected, based on a signal frequency, to a diplexer that is in the second diplexer and that is corresponding to the signal frequency, so that a signal from the shared antenna is received by using the second diplexer and the second receiving switch, and then the signal is transmitted to an independent LNA of a corresponding spectrum.

Further, the signal transmission apparatus 1300 further includes a second control module. The second control module is configured to: based on a channel capacity requirement, control the first sending switch (the first switch) to be connected to the first diplexer, or the second switch to be connected to the second diplexer. In addition, the signal transmission apparatus 1300 may further include a third control module. If the second diplexer is connected to the second switch, the third control module is configured to control, based on a signal frequency, the second switch to be connected to a diplexer that is in the second diplexer and that is corresponding to the signal frequency.

For example, a frequency of a signal sent by the signal transmission apparatus 1300 is 650 MHz. Based on the channel capacity requirement, if a large capacity needs to be met, the second control module controls the first switch to be connected to the first diplexer; or if a large capacity does not need to be met, the second control module controls the second switch to be connected to the second diplexer. Further, based on the frequency (that is, 650 MHz) of the signal sent by the signal transmission apparatus, the third control module controls the second switch to be connected to a second diplexer of the corresponding signal frequency.

It should be understood that, in the signal transmission apparatus 1300, the second sending switch configured to send a signal and the first sending switch may be a same switch. In FIG. 13, for example, the switch may be a single-pole four-throw switch. The second control module may select, based on the channel capacity requirement, the switch to be connected to the first diplexer or the second diplexer, and select, based on a frequency of a transmitted signal, the switch to be connected to a diplexer that is in the second diplexer and that is corresponding to the signal frequency.

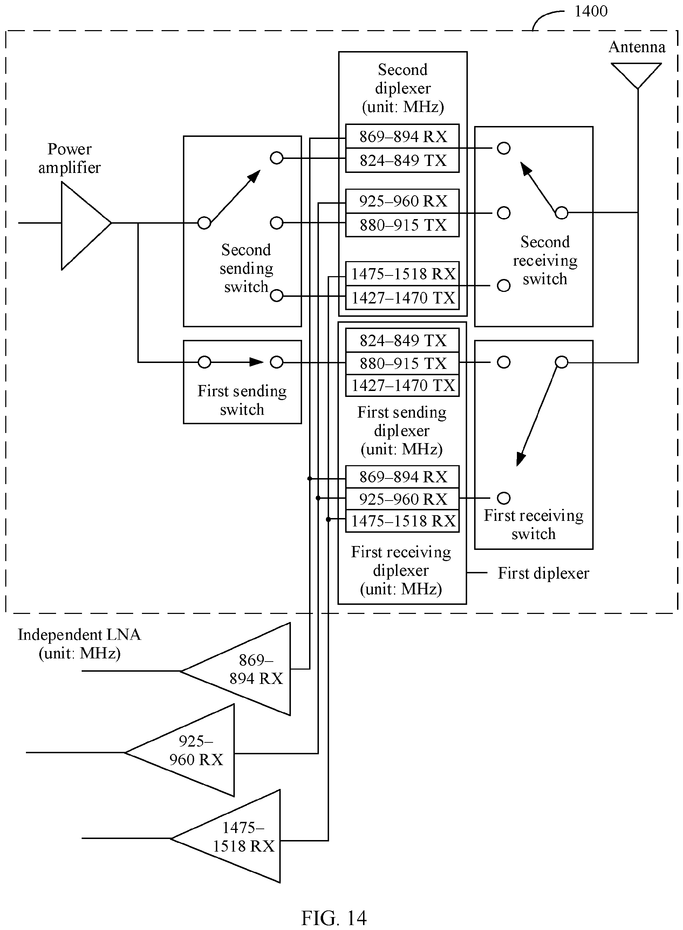

FIG. 14 is a schematic block diagram of a signal transmission apparatus 1400 according to an embodiment of this application. Specifically, as shown in FIG.

14, the signal transmission apparatus 1400 may include a power amplifier, an antenna, a first switch, a first diplexer, a second switch, and a second diplexer. The first diplexer includes a first sending diplexer and a first receiving diplexer. The first sending diplexer includes filters corresponding to three different operating frequency bands (to be specific, 5th, 8th, and 74th operating frequency bands) of three uplink spectrums of an 824-849 TX spectrum, an 880-915 TX spectrum, and a 1427-1470 TX spectrum (unit: MHz). The first receiving diplexer includes filters corresponding to three different operating frequency bands (to be specific, 5th, 8th, and 74th operating frequency bands) of three downlink spectrums of an 869-894 RX spectrum, a 925-960 RX spectrum, and a 1475-1518 RX spectrum (unit: MHz). The first switch is a switch connected to the first diplexer. The first switch includes a first sending switch that is a single-pole single-throw switch and a first receiving switch that is a single-pole double-throw switch. The second diplexer includes three diplexers, including filters respectively corresponding to three operating frequency bands (to be specific, 5th, 8th, and 74th operating frequency bands) of an 824-849 TX spectrum and an 869-894 RX spectrum, an 880-915 TX spectrum and a 925-960 RX spectrum, and a 1427-1470 TX spectrum and a 1475-1518 RX spectrum (unit: MHz). The second switch is a switch connected to the second diplexer. The second switch includes a second sending switch configured to send a signal and a second receiving switch configured to receive a signal, and both of which are single-pole triple-throw switches.

In an uplink transmission scenario, the shared power amplifier is in a multi-frequency transmission operating mode, and based on a channel capacity requirement, the first diplexer is connected to the first switch, or the second diplexer is connected to the second diplexer. For example, in a small-traffic communication scenario, the second switch may be connected, based on a signal frequency, to a diplexer that is in the second diplexer and that is corresponding to the signal frequency, so that a signal from the shared power amplifier is received by using the second sending switch and the second diplexer, and the signal is transmitted to the shared antenna by using the second receiving switch, thereby completing uplink transmission. In this way, effect of low energy consumption and a low loss of a terminal device can be achieved, and a balance between communication and power consumption can be obtained. In a heavy-traffic communication scenario, the first switch may be connected to the first diplexer. Based on a service requirement, that is, a service requirement of uplink transmission, the first sending switch and the first receiving switch are connected to the first sending diplexer, so that a signal from the shared power amplifier is received by using the first sending switch and the first sending diplexer, and the signal is transmitted to the shared antenna by using the first receiving switch, thereby completing uplink transmission. Therefore, a multi-frequency signal including a low frequency can be simultaneously sent, thereby improving a channel bandwidth, improving a channel quality, and meeting an uplink large-capacity requirement.

In a downlink transmission scenario, after a signal is received by the shared antenna, based on a channel capacity requirement, the first diplexer is connected to the first switch, or the second diplexer is connected to the second diplexer. For example, in a small-traffic communication scenario, the second receiving switch may be connected, based on a signal frequency, to a second diplexer of the corresponding frequency, so that the signal from the shared antenna is received by using the second receiving switch and the second diplexer, and the signal is transmitted to an independent LNA of a corresponding spectrum. In this way, effect of low energy consumption and a low loss of a terminal device can be achieved, and a balance between communication and power consumption can be obtained. In a downlink large-capacity communication scenario, the first receiving switch may be connected to the first diplexer. Based on a service requirement, that is, a service requirement of downlink transmission, the first receiving switch may be connected to the first receiving diplexer, so that the signal from the shared antenna is received by using the first receiving switch and the first receiving diplexer, and the signal is transmitted to an independent LNA of a corresponding spectrum. Therefore, a multi-frequency signal including a low frequency can be simultaneously received, thereby improving a channel bandwidth, improving a channel quality, and meeting a downlink large-capacity requirement.

Further, the signal transmission apparatus 1400 further includes a second control module. The second control module is configured to: based on a channel capacity requirement, control the first diplexer to be connected to the first switch, or the second diplexer to be connected to the second switch. In addition, the signal transmission apparatus 1400 may further include a first control module. If the first diplexer is connected to the first switch, the first control module is configured to: based on a service requirement, control the first receiving switch to be connected to the first receiving diplexer, or both the first sending switch and the first receiving switch to be connected to the first sending diplexer. In addition, the signal transmission apparatus 800 may further include a third control module. If the second diplexer is connected to the second switch, the third control module is configured to control, based on a signal frequency, the second switch to be connected to a diplexer that is in the second diplexer and that is corresponding to the signal frequency.

For example, a frequency of a signal received by the signal transmission apparatus 1400 is 890 MHz. In a communication scenario in which a large capacity is required, the second control module controls the first switch to be connected to the first diplexer. Further, based on a service requirement (that is, a service requirement of downlink transmission), the first control module controls the first receiving switch to be connected to the first receiving diplexer. In a communication scenario in which a large capacity is not required, the second control module controls the second switch to be connected to the second diplexer. Further, based on the frequency (that is, 890 MHz) of the signal, the third control module controls the second switch to be connected to a diplexer of the corresponding signal frequency.

It should be understood that, in the signal transmission apparatus 1400, the second sending switch configured to send a signal and the first sending switch may be a same switch, and the second receiving switch and the first receiving switch may be a same switch. For example, in FIG. 14, the second sending switch and the first sending switch may be combined into a single-pole four-throw switch, and the second receiving switch and the first receiving switch may be combined into a single-pole five-throw switch. The second control module may select, based on the channel capacity requirement and the service requirement, the foregoing switch to be connected to the first diplexer or the second diplexer, and if the foregoing switch is connected to the second diplexer, may further select, based on the signal frequency, the foregoing switch to be connected to a diplexer that is in the second diplexer and that is corresponding to the signal frequency.

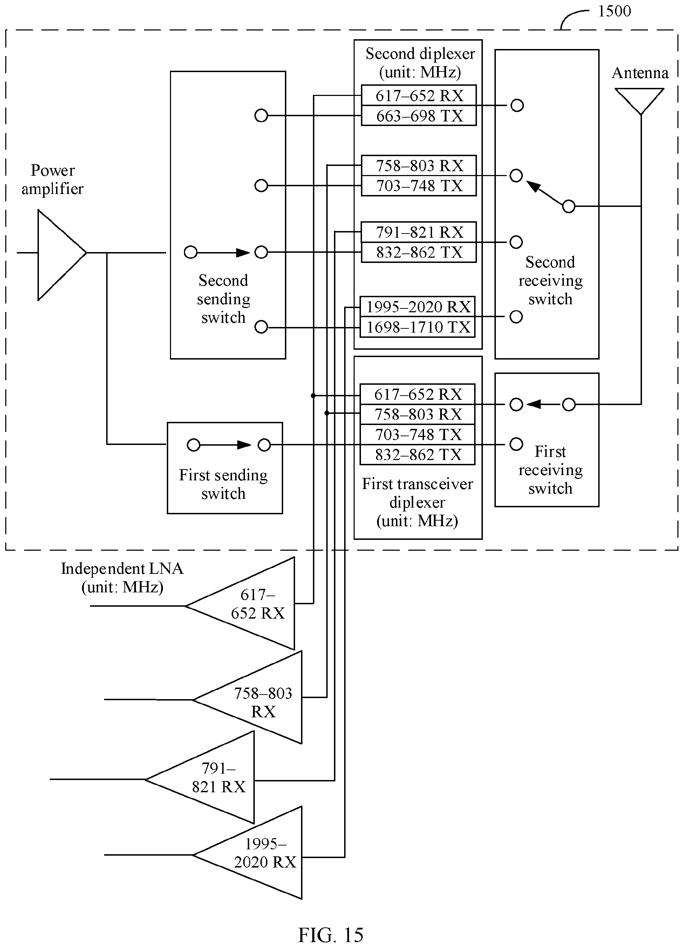

FIG. 15 is a schematic block diagram of a signal transmission apparatus 1500 according to an embodiment of this application. Specifically, as shown in FIG. 15, the signal transmission apparatus 1500 may include a power amplifier, an antenna, a first switch, a first transceiver diplexer (that is, a first diplexer), a second switch, and a second diplexer. The first transceiver diplexer includes filters corresponding to a total of four different operating frequency bands (to be specific, $20^{th}$, $28^{th}$, $70^{th}$, and $71^{st}$ operating frequency bands) of two uplink spectrums and two downlink spectrums of an 832-862 TX spectrum, a 703-748 TX spectrum, a 1995-2020 RX spectrum, and a 617-652 RX spectrum (unit: MHz). The first switch is a switch connected to the first diplexer. The first switch includes a first sending switch that is a single-pole single-throw switch and a first receiving switch that is a single-pole double-throw switch. The second diplexer includes four diplexers, including filters respectively corresponding to four operating frequency bands (to be specific, $20^{th}$, $28^{th}$, $70^{th}$, and $71^{st}$ operating frequency bands) of an 832-862 TX spectrum and a 791-821 RX spectrum, a 703-748 TX spectrum and a 758-803 RX spectrum, a 1698-1710 TX spectrum and a 1995-2020 RX spectrum, and a 663-698 TX spectrum and a 617-652 RX spectrum (unit: MHz). The second switch is a switch connected to the second diplexer. The second switch includes a second sending switch configured to send a signal and a second receiving switch configured to receive a signal, and both of which are single-pole four-throw switches.

In a scenario of simultaneous uplink and downlink transmission, the shared power amplifier is in a multi-frequency transmission operating mode, and the shared antenna may receive a signal. Based on a channel capacity requirement, the first diplexer is connected to the first switch, or the second diplexer is connected to the second diplexer. For example, in a small-traffic communication scenario, the second receiving switch may be connected, based on a signal frequency, to a diplexer that is in the second diplexer and that is corresponding to the signal frequency, so that signals from the shared power amplifier and the shared antenna are transmitted by using the second switch and the second diplexer. In this way, effect of low energy consumption and a low loss of a terminal device can be achieved, and a balance between communication and power consumption can be obtained. In an uplink and downlink large-capacity communication scenario, both the first sending switch and the first receiving switch may be connected to the first transceiver diplexer, so that signals from the shared power amplifier and the shared antenna are transmitted by using the first sending switch, the first receiving switch, and the first transceiver diplexer. Therefore, a multi-frequency signal including a low frequency can be simultaneously received and sent, thereby improving a channel bandwidth, improving a channel quality, and meeting uplink and downlink large-capacity requirements.

Further, the signal transmission apparatus 1500 further includes a second control module. The second control module is configured to: based on a channel capacity requirement, control the first switch to be connected to the first transceiver diplexer, or the second switch to be connected to the second diplexer. In addition, the signal transmission apparatus 1500 further includes a third control module. If the second diplexer is connected to the second switch, the third control module is configured to control, based on a signal frequency, the second switch to be connected to a diplexer that is in the second diplexer and that is corresponding to the signal frequency.

For example, a frequency of a signal received by the signal transmission apparatus 1500 is 650 MHz. In a communication scenario in which a large capacity is required, the second control module controls the first switch to be connected to the first transceiver diplexer (the first diplexer). In a communication scenario in which a large capacity is not required, the second control module controls the second switch to be connected to the second diplexer. Further, based on the frequency (that is, 650 MHz) of the signal, the third control module controls the second switch to be connected to a diplexer of the corresponding signal frequency. It should be understood that in the signal transmission apparatus 1500, the second sending switch configured to send a signal and the first sending switch may be a same switch, and the second receiving switch and the first receiving switch may be a same switch. For example, in FIG. 15, the second sending switch and the first sending switch may be combined into a single-pole five-throw switch, and the second receiving switch and the first receiving switch may be combined into a single-pole six-throw switch. The second control module may select, based on the channel capacity requirement and a service requirement, the foregoing switch to be connected to the first transceiver diplexer or the second diplexer, and if the foregoing switch is connected to the second diplexer, may further determine, based on the signal frequency, that the foregoing switch is connected to a diplexer that is in the second diplexer and that is corresponding to the signal frequency.

It should be further understood that the filters in the diplexers included in the foregoing embodiments may filter out, based on the signal frequency, signals that are transmitted by using the diplexers and that are other than the signal. In other words, a frequency division function of a high-pass filter, a low-pass filter, or a band-pass filter may be used, so that a same antenna or transmission link can simultaneously use two signal paths on different frequencies, thereby implementing receiving and sending of two signals with different frequencies by the same antenna or transmission link.

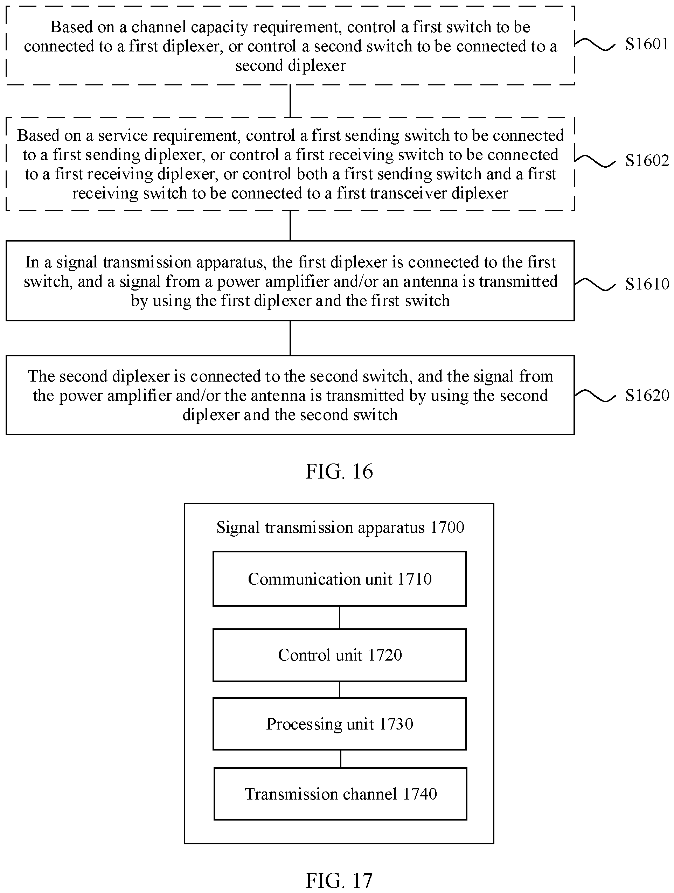

FIG. 16 is a schematic flowchart of a signal transmission method 1600 according to an embodiment of this application. The method shown in FIG. 16 may be applied to the signal transmission apparatuses shown in FIG. 5 to FIG. 15. As shown in FIG. 16, the method 1600 may include the following steps.

S1610: In a signal transmission apparatus, a first diplexer is connected to a first switch, and a signal from a power amplifier and/or an antenna is transmitted by using the first diplexer and the first switch.

The signal transmission apparatus is applied to a frequency division duplex mode and includes the first switch, the first diplexer, and the power amplifier and/or the antenna. The first diplexer includes filters corresponding to m operating frequency bands, each operating frequency band includes an uplink spectrum and/or a downlink spectrum, frequencies of uplink spectrums and/or downlink spectrums included in the m operating frequency bands do not overlap with each other, a frequency of at least one spectrum included in the uplink spectrums and/or the downlink spectrums in the m operating frequency bands is less than or equal to 1 GHz, and m is an integer greater than or equal to 2.

For example, the signal transmission apparatus is applied to the frequency division duplex mode, and includes the first switch, the first diplexer, and the power amplifier and/or the antenna. There may be one or more first switches, one first switch may be a single-pole N-throw switch, and a value of N is determined based on a specific quantity of diplexers. The first diplexer includes the filters corresponding to the m operating frequency bands, each operating frequency band includes an uplink spectrum and/or a downlink spectrum, the frequencies of the uplink spectrums and/or the downlink spectrums included in the m operating frequency bands do not overlap with each other, a frequency of at least one spectrum included in the uplink spectrums and/or the downlink spectrums in the m operating frequency bands is less than or equal to 1 GHz, and m is an integer greater than or equal to 2. In addition, there may be one or more first diplexers. The power amplifier may implement simultaneous sending of a multi-frequency signal, and the antenna may implement simultaneous receiving of a multi-frequency signal.

Further, the first diplexer may include at least one of the following diplexers: a first sending diplexer, a first receiving diplexer, or a first transceiver diplexer. The first sending diplexer includes filters corresponding to m uplink spectrums, and the m operating frequency bands include the m uplink spectrums; the first receiving diplexer includes filters corresponding to m downlink spectrums, and the m operating frequency bands include the m downlink and uplink spectrums; and the first transceiver diplexer includes filters corresponding to $z_i$ uplink spectrums and $z_2$ downlink spectrums, the m operating frequency bands include the $z_i$ uplink spectrums and the $z_2$ downlink spectrums, $z_1 + z_2 \in [m, 2m]$, and $z_i$ and $z_2$ are positive integers.

For example, the first sending diplexer may include filters corresponding to three different operating frequency bands (to be specific, 8th, 20th, and 71st operating frequency bands) of three uplink spectrums of an 880-915 TX spectrum, an 832-862 TX spectrum, and a 663-698 TX spectrum (unit: MHz), and the first receiving diplexer may include filters corresponding to three different operating frequency bands (to be specific, 5th, 8th, and 66th operating frequency bands) of three downlink spectrums of an 869-897 RX spectrum, a 925-960 RX spectrum, and a 2110-2200 RX spectrum (unit: MHz). The first transceiver diplexer may include filters corresponding to a total of four different operating frequency bands (to be specific, 20th, 28th, 70th, and 71st operating frequency bands) of two uplink spectrums and two downlink spectrums of an 832-862 TX spectrum, a 703-748 TX spectrum, a 1995-2020 RX spectrum, and a 617-652 RX spectrum (unit: MHz).

In addition, the first switch may include a first sending switch and/or a first receiving switch, where the first diplexer includes the first sending diplexer, and the first sending diplexer is connected to the first sending switch; or the first diplexer includes the first receiving diplexer, and the first receiving diplexer is connected to the first receiving switch; or the first diplexer includes the first transceiver diplexer, and the first transceiver diplexer is connected to the first sending switch and the first receiving switch.

S1602: Based on a service requirement, control the first sending switch to be connected to the first sending diplexer, or control the first receiving switch to be connected to the first receiving diplexer, or control both the first sending switch and the first receiving switch to be connected to the first transceiver diplexer.

Optionally, before S1610, based on a service requirement, the first sending switch may be further controlled to be connected to the first sending diplexer, or the first receiving switch may be further controlled to be connected to the first receiving diplexer, or both the first sending switch and the first receiving switch may be further controlled to be connected to the first transceiver diplexer. The service requirement may include a service requirement of uplink transmission, a service requirement of downlink transmission, and a service requirement for simultaneously performing uplink transmission and downlink transmission.

For example, when the service requirement is for uplink transmission, the first sending switch may be connected to the first sending diplexer, so that a signal from the power amplifier is sent by using the first sending diplexer and the first sending switch.

For example, when the service requirement is for downlink transmission, the first receiving switch may be connected to the first receiving diplexer, so that a signal from the antenna is received by using the first receiving diplexer and the first receiving switch.

For example, when the service requirement is for simultaneously performing uplink transmission and downlink transmission, both the first sending switch and the first receiving switch may be connected to the first transceiver diplexer, so that signals from the power amplifier and the antenna are received and sent by using the first transceiver diplexer, the first sending switch, and the first receiving switch.

S 1620: A second diplexer is connected to a second switch, and the signal from the power amplifier and/or the antenna is transmitted by using the second diplexer and the second switch.

The signal transmission apparatus further includes the second diplexer and the second switch. The second diplexer includes a filter corresponding to one operating frequency band, and the operating frequency band includes an uplink spectrum and a downlink spectrum.

For example, the signal transmission apparatus further includes the second diplexer and the second switch. The second diplexer includes a filter corresponding to one operating frequency band, and the operating frequency band includes an uplink spectrum and a downlink spectrum. In addition, there may be one or more diplexers included in the second diplexer. The power amplifier may implement simultaneous sending of a multi-frequency signal, and the antenna may implement simultaneous receiving of a multi-frequency signal. Further, the second switch may include a second sending switch and a second receiving switch. If the second sending switch and the second receiving switch are connected to the second diplexer, the signal from the shared power amplifier may be sent by using the second sending switch and the second diplexer, and the signal is transmitted to the shared antenna by using the second receiving switch. If the second receiving switch and the second diplexer are connected, the signal from the shared antenna may be received by using the second receiving switch and the second diplexer, and sent to an independent LNA of a corresponding spectrum. If the second sending switch and the second receiving switch are simultaneously connected to the second diplexer, signals from the shared power amplifier and the shared antenna may be received and sent by using the second sending switch, the second diplexer, and the second receiving switch.

For example, the second diplexer may include one diplexer that is a filter corresponding to an operating frequency band of a 900 RX spectrum and a 900 TX spectrum (unit: MHz); or may include a plurality of diplexers, for example, three diplexers, including filters respectively corresponding to three operating frequency bands (to be specific, 20th, 28th, and 70th operating frequency bands) of an 832-862 TX spectrum and a 791-821 RX spectrum, a 703-748 TX spectrum and a 758-803 RX spectrum, and a 1698-1710 TX spectrum and a 1995-2020 RX spectrum (unit: MHz).

Further, if the second switch is connected to the second diplexer, based on a signal frequency, the second switch may be controlled to be connected to a diplexer that is in the second diplexer and that is corresponding to the signal frequency.

S1601: Based on a channel capacity requirement, control the first switch to be connected to the first diplexer, or control the second switch to be connected to the second diplexer.

Optionally, before S1602, based on a channel capacity requirement, the first switch may be further controlled to be connected to the first diplexer, or the second switch may be further controlled to be connected to the second diplexer.

For example, in a communication scenario in which a large capacity of a channel is required, the first switch may be controlled to be connected to the first diplexer; and in a small-traffic communication scenario, the second switch may be controlled to be connected to the second diplexer.

It should be understood that, in the foregoing solutions, the first receiving switch and the second receiving switch may be combined into one switch, and the first sending switch and the second sending switch may be combined into one switch.

It should be further understood that the filters in the diplexers included in the foregoing technical solutions may filter out, based on the signal frequency, signals that are transmitted by using the diplexers and that are other than the signal. In other words, a frequency division function of a high-pass filter, a low-pass filter, or a band-pass filter may be used, so that a same antenna or transmission link can simultaneously use two signal paths on different frequencies, thereby implementing receiving and sending of two signals with different frequencies by the same antenna or transmission link.

Based on the foregoing solutions, in a communication scenario in which a large capacity of a channel is required, the first diplexer may be connected to the first switch, so that the signal from the shared power amplifier and/or the antenna is transmitted. Further, in a signal transmission manner, the first receiving diplexer is connected to the first receiving switch, or the first sending diplexer is connected to the first sending switch, or the first transceiver diplexer is connected to the first sending switch and the first receiving switch, so that a large channel capacity can be obtained, a channel bandwidth can be increased, and a multi-frequency signal including a low frequency can be simultaneously received, or a multi-frequency signal can be simultaneously sent, or a multi-frequency signal can be simultaneously received and sent, so that uplink or downlink cooperation of different spectrums can be implemented at a same moment, thereby improving an instantaneous capacity bandwidth, improving a channel quality, and meeting an uplink and/or downlink large-capacity requirement. In a small-capacity communication scenario or a communication scenario in which heavy traffic is not required, the second diplexer may be controlled to be connected to the second switch, so that a terminal device operates in only one operating frequency band at a same moment, thereby achieving effect of low energy consumption and a low loss, and achieving a balance between communication and power consumption.

FIG. 17 is a schematic block diagram of a signal transmission apparatus 1700 according to an embodiment of this application. As shown in the figure, the signal transmission apparatus 1700 may include a communication unit 1710, a control unit 1720, a processing unit 1730, and a transmission channel 1740.

Specifically, the signal transmission apparatus 1700 may include units configured to perform the method 1600 in FIG. 16. In addition, the units in the signal transmission apparatus 1700 and the foregoing other operations and/or functions are respectively used to implement corresponding procedures performed by the signal transmission apparatus in the method 1600 in FIG. 16. It should be understood that a specific process in which the units perform the foregoing corresponding steps is described in detail in the foregoing method embodiment. For brevity, details are not described herein again.

According to the signal transmission apparatus provided in this embodiment of this application, an embodiment of this application further provides a terminal device. The terminal device includes the foregoing signal transmission apparatus.

In several embodiments provided in this application, it should be understood that the disclosed apparatus and method may be implemented in other manners. For example, the described apparatus embodiments are merely examples. For example, division of the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between apparatuses or units may be implemented in electronic or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal transmission apparatus, applied to a frequency division duplex FDD mode, comprising a first switch, a first diplexer, a power amplifier, and/or an antenna, wherein

the first diplexer comprises filters corresponding to m operating frequency bands, each operating frequency band comprises an uplink spectrum and/or a downlink spectrum, frequencies of uplink spectrums and/or downlink spectrums comprised in the m operating frequency bands do not overlap with each other, a frequency of at least one of the uplink spectrums and/or the downlink spectrums comprised in the m operating frequency bands is less than or equal to 1 GHz, and m is an integer greater than or equal to 2;
the power amplifier or the antenna or both are connected to the first switch; and
the first diplexer is connected to the first switch, and a signal from the power amplifier and/or the antenna is transmitted by using the first diplexer and the first switch.

2. The apparatus according to claim 1, wherein the first diplexer comprises at least one of the following:

a first sending diplexer, a first receiving diplexer, or a first transceiver diplexer;
the first sending diplexer comprises filters corresponding to m uplink spectrums, and the m operating frequency bands comprise the m uplink spectrums;
the first receiving diplexer comprises filters corresponding to m downlink spectrums, and the m operating frequency bands comprise the m downlink spectrums; and
the first transceiver diplexer comprises filters corresponding to zi uplink spectrums and $z_2$ downlink spectrums, the m operating frequency bands comprise the zi uplink spectrums and the $z_2$ downlink spectrums, $z_1+z_2\in[m, 2m]$, and zi and $z_2$ are positive integers.

3. The apparatus according to claim 2, wherein the first switch comprises a first sending switch and/or a first receiving switch, and

the first diplexer comprises the first sending diplexer, and the first sending diplexer is connected to the first sending switch; or
the first diplexer comprises the first receiving diplexer, and the first receiving diplexer is connected to the first receiving switch; or
the first diplexer comprises the first transceiver diplexer, and the first transceiver diplexer is connected to the first sending switch and the first receiving switch.

4. The apparatus according to claim 3, wherein the apparatus further comprises:
a first control module, configured to: based on a service requirement, control the first sending switch to be connected to the first sending diplexer, or control the first receiving switch to be connected to the first receiving diplexer, or control both the first sending switch and the first receiving switch to be connected to the first transceiver diplexer.

5. The apparatus according to any one of claims 1 to 4, wherein the apparatus further comprises a second switch and a second diplexer, the second diplexer comprises a filter corresponding to one operating frequency band, and the operating frequency band comprises an uplink spectrum and a downlink spectrum; and
the second diplexer is connected to the second switch, and the signal from the power amplifier and/or the antenna is transmitted by using the second diplexer and the second switch.

6. The apparatus according to claim 5, wherein the apparatus further comprises:
a second control module, configured to: based on a channel capacity requirement, control the first switch to be connected to the first diplexer, or control the second switch to be connected to the second diplexer.

7. A signal transmission method, applied to a signal transmission apparatus in a frequency division duplex FDD mode, wherein the signal transmission apparatus comprises a first switch, a first diplexer, a power amplifier, and/or an antenna; the first diplexer comprises filters corresponding to m operating frequency bands; each operating frequency band comprises an uplink spectrum and/or a downlink spectrum; frequencies of uplink spectrums and/or downlink spectrums comprised in the m operating frequency bands do not overlap with each other; a frequency of at least one spectrum comprised in the uplink spectrums and/or the downlink spectrums in the m operating frequency bands is less than or equal to 1 GHz; m is an integer greater than or equal to 2; the power amplifier or the antenna or both are connected to the first switch; and the method comprises: the first diplexer is connected to the first switch, and a signal from the power amplifier and/or the antenna is transmitted by using the first diplexer and the first switch.

8. The method according to claim 7, wherein the first diplexer comprises at least one of the following:

   a first sending diplexer, a first receiving diplexer, or a first transceiver diplexer;
   the first sending diplexer comprises filters corresponding to m uplink spectrums, and the m operating frequency bands comprise the m uplink spectrums;
   the first receiving diplexer comprises filters corresponding to m downlink spectrums, and the m operating frequency bands comprise the m downlink spectrums; and
   the first transceiver diplexer comprises filters corresponding to $z_i$ uplink spectrums and $z_2$ downlink spectrums, the m operating frequency bands comprise the $z_i$ uplink spectrums and the $z_2$ downlink spectrums, $z_1 + z_2 \in [m, 2m]$, and $z_i$ and $z_2$ are positive integers.

9. The method according to claim 8, wherein the first switch comprises a first sending switch and/or a first receiving switch, and

   the first diplexer comprises the first sending diplexer, and the first sending diplexer is connected to the first sending switch; or
   the first diplexer comprises the first receiving diplexer, and the first receiving diplexer is connected to the first receiving switch; or
   the first diplexer comprises the first transceiver diplexer, and the first transceiver diplexer is connected to the first sending switch and the first receiving switch.

10. The method according to claim 9, wherein the method further comprises:
    based on a service requirement, controlling the first sending switch to be connected to the first sending diplexer, or controlling the first receiving switch to be connected to the first receiving diplexer, or controlling both the first sending switch and the first receiving switch to be connected to the first transceiver diplexer.

11. The method according to any one of claims 7 to 10, wherein the apparatus further comprises a second switch and a second diplexer, the second diplexer comprises a filter corresponding to one operating frequency band, and the operating frequency band comprises an uplink spectrum and a downlink spectrum, and the method further comprises:
the second diplexer is connected to the second switch, and the signal from the power amplifier and/or the antenna is transmitted by using the second diplexer and the second switch.

12. The method according to claim 11, wherein the method further comprises:
    based on a channel capacity requirement, controlling the first switch to be connected to the first diplexer, or controlling the second switch to be connected to the second diplexer.

13. A terminal device, comprising the signal transmission apparatus according to any one of claims 1 to 6.

FIG. 1

FIG. 2

Low-frequency
shared antenna

Diplexers of a same
operating frequency band
(unit: MHz)

Shared power amplifier

| 617–652 RX |
| 663–698 TX |

Single-pole
triple-throw
switch

Single-pole
triple-throw
switch

| 758–803 RX |
| 703–748 TX |

| 791–821 RX |
| 832–862 TX |

Low-frequency
independent LNA
(unit: MHz)

617–652
RX

758–803
RX

791–821
RX

FIG. 3

Medium-high frequency
shared antenna

Diplexers of different
operating frequency bands
(unit: MHz)

Shared power amplifier

| 1710–1785 TX |
| 1805–1880 RX |
| 1920–1980 TX |
| 2110–2170 RX |
| 2500–2570 TX |
| 2620–2690 RX |

Single-pole
triple-throw
switch

Medium-high frequency
independent LNA
(unit: MHz)

1805–1880
RX

2110–2170
RX

2620–2690
RX

FIG. 4

EP 4 358 417 A1

FIG. 5

EP 4 358 417 A1

600

Antenna

First switch

First diplexer
(unit: MHz)

663–698 TX

824–849 TX

1427–1470 TX

Power amplifier

FIG. 6

Antenna

Independent LNA
(unit: MHz)

First diplexer
(unit: MHz)

617–652
RX

791–821
RX

1475–
1518 RX

| 617–652 RX |
| 791–821 RX |
| 1475–1518 RX |

First switch

700

FIG. 7

FIG. 8

EP 4 358 417 A1

900

Antenna

First switch

First diplexer
(unit: MHz)

663–698 TX
824–849 TX

824–849 TX
791–821 RX
1475–1518 RX

First switch

Power amplifier

Independent LNA
(unit: MHz)

791–821
RX

1475–1518
RX

FIG. 9

FIG. 10

FIG. 11

1200

Antenna

Second
diplexer
(unit: MHz)

869–897 RX
824–849 TX

925–960 RX
880–915 TX

2110–2200 RX
1710–1780 TX

Power
amplifier

Second
sending switch

Second
receiving
switch

869–897 RX
925–960 RX
2110–2200 RX

First diplexer
(unit: MHz)

First receiving
switch

Independent LNA
(unit: MHz)

869–897
RX

925–960
RX

2110–
2200 RX

FIG. 12

FIG. 13

1400

Antenna

Power
amplifier

Second
diplexer
(unit: MHz)

| 869–894 RX |
| 824–849 TX |

| 925–960 RX |
| 880–915 TX |

| 1475–1518 RX |
| 1427–1470 TX |

Second
sending
switch

Second
receiving
switch

First sending
switch

| 824–849 TX |
| 880–915 TX |
| 1427–1470 TX |

First sending
diplexer
(unit: MHz)

| 869–894 RX |
| 925–960 RX |
| 1475–1518 RX |

First receiving
diplexer
(unit: MHz)

First receiving
switch

First diplexer

Independent LNA
(unit: MHz)

869–
894 RX

925–
960 RX

1475–
1518 RX

FIG. 14

1500

Second diplexer
(unit: MHz)

| 617–652 RX |
| 663–698 TX |

| 758–803 RX |
| 703–748 TX |

| 791–821 RX |
| 832–862 TX |

| 1995–2020 RX |
| 1698–1710 TX |

Antenna

Power
amplifier

Second
sending
switch

Second
receiving
switch

First transceiver
diplexer
(unit: MHz)

| 617–652 RX |
| 758–803 RX |
| 703–748 TX |
| 832–862 TX |

First
receiving
switch

First sending
switch

Independent LNA
(unit: MHz)

617–
652 RX

758–803
RX

791–
821 RX

1995–
2020 RX

FIG. 15

Based on a channel capacity requirement, control a first switch to be connected to a first diplexer, or control a second switch to be connected to a second diplexer ⌇ S1601

Based on a service requirement, control a first sending switch to be connected to a first sending diplexer, or control a first receiving switch to be connected to a first receiving diplexer, or control both a first sending switch and a first receiving switch to be connected to a first transceiver diplexer ⌇ S1602

In a signal transmission apparatus, the first diplexer is connected to the first switch, and a signal from a power amplifier and/or an antenna is transmitted by using the first diplexer and the first switch ⌇ S1610

The second diplexer is connected to the second switch, and the signal from the power amplifier and/or the antenna is transmitted by using the second diplexer and the second switch ⌇ S1620

FIG. 16

Signal transmission apparatus 1700

Communication unit 1710

Control unit 1720

Processing unit 1730

Transmission channel 1740

FIG. 17

## INTERNATIONAL SEARCH REPORT

| International application No. |
| --- |
| **PCT/CN2022/098788** |

**A. CLASSIFICATION OF SUBJECT MATTER**

H04B 1/00(2006.01)i; H04B 1/401(2015.01)i

According to International Patent Classification (IPC) or to both national classification and IPC

**B. FIELDS SEARCHED**

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNTXT; VEN; WPABSC; ENTXTC; WPABS; ENTXT; WOTXT; CNKI: 频分双工, 频段, 波段, 频带, 波带, 频率, 滤波器, 滤波单元, 滤波模块, 滤波电路, 不重叠, 不同, 不相同, 多, 两, 多频, 双工, 多工, 滤波器组, 业务量, 数据量, FDD, band, frequency, multiple, multi, filter, duplexer, multiplexer, different, nonoverlapping, traffic, data, flow

**C. DOCUMENTS CONSIDERED TO BE RELEVANT**

| Category* | Citation of document, with indication, where appropriate, of the relevant passages | Relevant to claim No. |
| --- | --- | --- |
| X | US 2020036401 A1 (QUALCOMM INC.) 30 January 2020 (2020-01-30) description, paragraphs [0004]-[0118], and figures 1-12 | 1-3, 7-9, 13 |
| Y | US 2020036401 A1 (QUALCOMM INC.) 30 January 2020 (2020-01-30) description, paragraphs [0004]-[0118], and figures 1-12 | 4-6, 10-12 |
| Y | WO 2019098494 A1 (T&I E CO., LTD.) 23 May 2019 (2019-05-23) description, paragraphs [10]-[151] | 4-6, 10-12 |
| A | US 2018367168 A1 (SAMSUNG ELECTRONICS CO., LTD.) 20 December 2018 (2018-12-20) entire document | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 August 2022** | **30 August 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/098788**

| Patent document cited in search report | | | Publication date (day/month/year) | Patent family member(s) | | | Publication date (day/month/year) |
|---|---|---|---|---|---|---|---|
| US | 2020036401 | A1 | 30 January 2020 | US | 10826543 | B2 | 03 November 2020 |
| WO | 2019098494 | A1 | 23 May 2019 | None | | | |
| US | 2018367168 | A1 | 20 December 2018 | US | 10673470 | B2 | 02 June 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110731743